# EUROPÄISCHE PATENTSCHRIFT

(11) **EP 1 488 201 B1**
(45) Veröffentlichungstag und Bekanntmachung des Hinweises auf die Patenterteilung: **26.10.2005**
(21) Anmeldenummer: 03722213.0
(22) Anmeldetag: 11.03.2003
(51) Int. Cl.: G01J 1/04, G01J 1/42

(54) **FOTOELEKTRISCHE MESSEINRICHTUNG**
PHOTOELECTRIC MEASURING DEVICE
UNITE DE MESURE PHOTOELECTRIQUE

(30) Priorität: 26.03.2002 DE 10213410
(43) Veröffentlichungstag der Anmeldung: 22.12.2004
(73) Patentinhaber: Gossen Foto- und Lichtmesstechnik GmbH, 90471 Nürnberg (DE)
(72) Erfinder: BAUER, Günter, 90301 Forchheim (DE)
(74) Vertreter: Hafner, Dieter
(86) Internationale Anmeldenummer: PCT/DE2003/000759
(87) Internationale Veröffentlichungsnummer: WO 2003/081189

(56) Entgegenhaltungen:
- DE-A- 3 236 773
- US-A- 2 584 440

## Beschreibung

Die Erfindung betrifft eine fotoelektrische Meßeinrichtung, insbesondere einen Handbelichtungsmesser für fotografische Aufnahmen.

Stand der Technik: Als Stand der Technik sind grundsätzlich zwei unterschiedliche Arten von fotoelektrischen Meßeinrichtungen, insbesondere von Handbelichtungsmessern bekannt, nämlich sogenannte analoge Geräte einerseits siehe z.B. das Dokument US-A-5284440 und digitale Geräte andererseits siehe z.B. das Dokument DE-A-3236773.

Analoge Geräte, die mit einer analogen Meßtechnik arbeiten, nutzen den Fotostrom eines lichteinpfindlichen Elementes zur Erzeugung eines anzeigbaren Signals. Der Fotostrom wird dabei einer Logarithmierstufe zugeführt, an deren Ausgang liegt eine Spannung an, die proportional zu einem Belichtungswert EV ist. Diese analoge Spannung kann über einen analogen Meßwertspeicher gespeichert werden, die Meßwertanzeige erfolgt ebenfalls analog entweder über ein Zeigerinstrument oder eine Lichtwaage.

Die Auswertung des angezeigten Wertes erfolgt durch Übertragung des gemessenen Wertes und der Einstellgrößen auf einen Rechenring, wobei über die Messwertanzeigevorrichtung ein Nullabgleich vorzunehmen ist. Über eine Skala des Rechenrings und eine Gegenskala am Gehäuse können dann geeignete Blenden/Zeit-Kombinationen abgelesen werden. Die Vorteile der analogen Technik sind zunächst eine unbegrenzte Anzeigedauer, da der Meßwert nach Übertragung auf den Rechenring mechanisch fixiert, d.h. eingefroren ist, darüber hinaus lassen sich auf einen Blick alle Zeit-Blendenkombinationen ablesen, auch Änderungen und Tendenzen der Lichtverhältnisse lassen sich bei Verwendung analoger Technik leicht beurteilen.

Werden als lichtempfindliche Elemente Selen-Elemente verwendet, wird keine eigene Stromversorgung benötigt, da der Energiebedarf für die Anzeige aus dem Meßsignal abgeleitet werden kann.

Diesen Vorteilen der analogen Technik stehen aber auch einige wesentliche Nachteile gegenüber. So sind die analog arbeitenden Geräte elektrisch und mechanisch aufwendig. Was die Meßwertanzeige anbelangt, so geht die Qualität des analogen Zeigerinstrumentes direkt in die Genauigkeit der fotoelektrischen Meßeinrichtung ein. Der Rechenring analoger Geräte sieht mehrfach übereinandergelagerte Skalen mit entsprechenden Ausblendungen vor, diese müssen für die Meßwertübertragung gegen versehentliches Verdrehen gesichert sein, alle Einstellungen, insbesondere auch die Filmempfindlichkeit und der Korrekturwert, können nur über den Rechenring vorgenommen werden.

Analoge Geräte sind darüber hinaus wegen der Verwendung elektromechanischer Elemente empfindlich gegen mechanische Schockbelastung und Verschmutzung, sowie extreme Temperaturen. Falls Reperaturen vorgenommen werden müssen, ist damit ebenfalls ein hoher Aufwand verbunden, der elektrische Abgleich der Geräte ist regelmäßig schwierig. Die Herstellungskosten sind relativ hoch. Werden keine Selenzellen verwendet, dann bringt die analoge Technik einen relativ hohen Stromverbrauch mit sich, weil die komplette Schaltung des Meßsystems während der gesamten Messung mit Strom versorgt werden muß. Der Meßwert auch genannt Übertragungswert, hat keinen direkten Bezug zur eigentlichen Belichtung, darüber hinaus führen Selen-Elemente zu einem relativ trägen, unempfindlichen und ungenauen Meßvorgang.

Auch bei digitalen Geräten wird der Fotostrom eines lichtempfindlichen Elementes einer Logarithmierstufe zugeführt, deren Ausgangsspannung proportional zu einem Belichtungswert EV ist. Diese Spannung wird einem Analog-/Digitalwandler zugeführt, dessen digitale Ausgangswerte können in einem Rechner gespeichert werden. Dort erfolgt die Auswertung, wobei Einstellgrößen im Rechner mitverarbeitet werden können. Die Meßwertanzeige kann eine quasi analoge Balkenanzeige, eine LED-Kette oder ein LCD Bargraph sein. Außerdem können grundsätzlich Blenden/Zeit-Kombinationen digital auf einem Display angezeigt werden, auch die Anzeige anderer Kombinationen ist durch Auswahltasten möglich.

Die Vorteile der digitalen Technik liegen insbesondere in der Robustheit und Unempfindlichkeit digitaler Geräte gegenüber extremen Einflüssen, d.h. solche Geräte sind auch für rauhe Betriebsbedingungen gut geeignet. Die Montage ist deutlich geringer als bei analogen Geräten, der Abgleich der Geräte ist automatisierbar, so daß daraus geringe Herstellungskosten resultieren.

Die in den Geräten integrierte Stromquelle wird nur während der eigentlichen Messung beansprucht, der Stromverbrauch bei Anzeige der gemessenen Werte liegt in der Höhe der Selbstentladung der Stromquelle und ist damit vernachlässigbar. Ein wesentlicher Vorteil der Geräte liegt insbesondere in der "Rechenfähigkeit", d.h. Einstellgrößen können direkt von dem Prozessor mitverarbeitet werden, was der Benutzerfreundlichkeit zugute kommt. Mit elektronischen Standardbauelementen kann eine hohe Meßgenauigkeit realisiert werden, es ist mehr als nur ein Meßwert speicherbar, durch eine Prozessorsteuerung sind darüber hinaus eine Vielzahl von Meß- und Auswertefunktionen grundsätzlich möglich.

Die Nachteile der digitalen Technik liegen im wesentlichen darin, daß jeweils nur eine Blenden-/Zeitkombination darstellbar ist, Blendenzwischenwerte führen zu verwirrenden Anzeigen z.B. ein Blendenwert F: 5.6 9 ist eigentlich ein Blendenwert F 8.

Die Bedienung ist anhand multifunktionaler Menütasten meistens umständlich, die Auswertungen von Beleuchtungstendenzen sind nur über simulierte Analoganzeigenelemente möglich, diese haben eine beschränkte Auflösung.

Um eine Mehrzahl von Informationen darzustellen, sind darüber hinaus große Anzeigeflächen erforderlich, was in nachteiliger Weise zu relativ großvolumigen Geräten führt.

Der Erfindung liegt die Aufgabe zugrunde, eine fotoelektrische Meßeinrichtung, insbesondere einen Handbelichtungsmesser für fotografische Aufnahmen derart auszubilden, daß eine Vielzahl möglicher Blenden-/Zeitkombinationen auf einen Blick erkennbar ist, Änderungen und Tendenzen leicht beurteilt werden können, wobei der Handbelichtungsmesser mit relativ geringem Aufwand herstellbar und robust und unempfindlich gegenüber extremen Einflüssen und hinsichtlich seiner Bedienungsfreundlichkeit verbessert sein soll. Diese Aufgabe wird durch die Merkmalskombination des Anspruches 1 gelöst, vorteilhafte Weiterbildungen der Erfindung ergeben sich aus den abhängigen Ansprüchen.

Der Kern der Erfindung liegt im Wesentlichen darin, die vorteilhaften Elemente jeweils aus der Digitaltechnik und der Analogtechnik miteinander so zu kombinieren, daß die vorstehend definierte Aufgabe gelöst wird. Dazu sind in einem Gehäuse ein lichtempfindliches Element angeordnet, dessen Ausgangssignal über einen A/D-Wandler einem Mikroprozessor zugeführt wird. Der Mikroprozessor ist in der Lage, die vom A/D-Wandler kommende Eingangsgröße mit weiteren Einstellwerten wie Filmempfindlichkeit, Korrekturwert und Kalibrierdaten zu einem Belichtungswert EV zu verrechnen, der auf einem Display gegebenenfalls in Kombination mit weiteren Werten (z.B. Filmempfindlichkeit und Korrekturwert) angezeigt werden kann. Von der analogen Technik ist ein einfacher, manuell verdrehbarer Rechenring übernommen, auf welchem entweder eine Belichtungszeitreihe oder eine Blendenreihe angeordnet ist, die durch Verdrehen des Rechenrings einer am Gehäuse angeordneten Blendenreihe bzw. Belichtungszeitreihe, also einer Gegenskala in Gegenüberstellung bringbar ist, um mögliche Belichtungszeit/Blendenkombinationen auf einen Blick ablesen zu können.

Damit der Rechenring in die der Lichtmessung entsprechende Stellung gedreht werden kann, ist am Rechenring zusätzlich eine gegenüber einer Gehäusemarkierung oder in einem Gehäusefenster verdrehbare Belichtungswertereihe angeordnet. Der der Gehäusemarkierung gegenüberliegende oder in dem Gehäusefenster sichtbare EV-Wert (oder ein anderer geeigneter Belichtungswert) ist lediglich mit dem auf dem Display numerisch angezeigten Belichtungswert in Übereinstimmung zu bringen, um die möglichen Blenden/Belichtungszeitkombinationen abzulesen.

Gegenüber den Rechenringen bei analogen Handbelichtungsmessern ist der erfindungsgemäße Rechenring stark vereinfacht, insbesondere sind nicht mehrere übereinanderliegende Rechenringe vorgesehen, da Korrekturwerte, Filmempfindlichkeitswerte, Kalibrierdaten und dergleichen mehr über den Prozessor mit dem ermittelten Lichtwert verrechnet werden. Aus diesem Grund ist die Rechenringanordnung mechanisch einfach und dadurch unempfindlich und preisgünstig herzustellen. Auch die Bedienung ist stark vereinfacht, weil der Benutzer nicht durch eine Vielzahl von ineinander liegenden Skalen verwirrt wird. Die Bedienung ist insgesamt einfach, nach Vorgabe der Filmempfindlichkeit muß lediglich eine Meßtaste am Gehäuse gedrückt werden, wodurch der "analog/digitale Meßvorgang" gestartet und auf dem Display der EV-Wert angezeigt wird. Durch Verdrehen des Rechenringes muß der gegenüber der Gehäusemarkierung oder im Gehäusefenster angezeigte EV-Wert auf dem Rechenring in Übereinstimmung mit dem auf dem Display angezeigten gebracht werden, die auf dem Rechenring aufgebrachte Skala und die Gegenskala zeigen dann in gewohnter Weise die möglichen Belichtungszeit/Blendenkombinationen.

Vorteilhafterweise liegen das Gehäusefenster und das Display nebeneinander oder übereinander in einer Gehäusefläche, so daß die Bedienung sehr übersichtlich ist. Wenn der Rechenring mit einem Teil seines Umfanges über die Oberseite des Gehäuses radial hinaussteht, ist auch die manuelle Bedienung vereinfacht.

Wie bei einem digitalen Gerät sind am Gehäuse, insbesondere an der Gehäuseoberseite eine Meßtaste und eine Programmauswahltaste angeordnet, wobei durch die Meßtaste das analog/digital arbeitende Meßsystem aktiviert werden kann und über die Programmauswahltaste unterschiedliche Programme oder Funktionen, auch zur Voreinstellung des Gerätes abgerufen werden können.

Das Display kann so gestaltet sein, daß neben dem Belichtungswert auch die Filmempfindlichkeit angezeigt werden kann.

Vorteilhafterweise kann die Meßeinrichtung darüber hinaus mit einer elektronischen Zeitbasis versehen, daraus abgeleitete Uhrzeitdaten und/oder Kalenderdaten können auf dem Display angezeigt werden. Dies erfolgt in der Grundeinstellung des Gerätes, nach Drücken der Programmauswahltaste werden sodann andere Daten insbesondere Belichtungsdaten der zuletzt angewendeten Funktion angezeigt.

Die Meßeinrichtung kann darüber hinaus mit einer Speichereinrichtung versehen werden, in welcher der zuletzt ermittelte angezeigte Belichtungswert bis zur Durchführung der nächstfolgenden Messung gespeichert ist. Es ist aber auch möglich, eine Vielzahl von Belichtungswerten zu speichern und datums- oder zeitmäßig zu ordnen und durch die Programmtaste wieder abzurufen.

Nach dem erstmaligen Aktivieren einer Spannungsquelle kann das Gerät einen Selbsttest durchführen, wobei alle Anzeigesegmente des Displays gleichzeitig oder der Reihe nach angesteuert werden. Die Meßeinrichtung umfaßt alternativ auch einen Temperatursensor, auf dem Display sind von diesem abgeleitete Temperaturwerte anzeigbar. Außerdem kann in das Gerät eine Stoppuhrfunktion integriert sein, beispielsweise um Langzeitbelichtungen zu vereinfachen.

Die Erfindung ist anhand eines Ausführungsbeispiels in den Zeichnungsfiguren näher erläutert. Diese zeigen:
- Fig. 1: eine Draufsicht auf einen Handbelichtungsmesser für fotografische Aufnahmen.
- Fig.2: eine Frontansicht des Handbelichtungsmessers gemäß Figur 1
- Fig.3: eine Seitenansicht des Handbelichtungsmessers gemäß Figur 1.
- Fig.4: eine schematische Darstellung der Schaltungs- und Anzeigekomponente.

Der Handbelichtungsmesser 1 weist ein Gehäuse 2 auf, in dessen Frontseite 3 ein lichtempfindliches Element 4 angeordnet ist, dessen Ausgangssignal über einen Analog-/Digitalwandler 30 einem Mikroprozessor 31 zugeführt wird. Im Mikroprozessor 31 werden die vom Analog-/Digitalwandler 30 kommenden Eingangsgrößen mit weiteren Einstellwerten zu einem Belichtungswert EV verrechnet, der auf einem Display 5 in digitaler Form anzeigbar ist. Das Display 5 ist auf der Oberseite 6 des Gehäuses 2 angeordnet.

In das Gehäuse 2 ist ein Rechenring 7 derart integriert, daß die Gehäuseoberseite 6 den Rechenring 7 bis auf einen sichtbaren und betätigbaren Randbereich 8 überdeckt, der über die Gehäuseoberfläche hinaussteht und an seinem Rand 9 mit einer Riffelung 10 versehen ist, um ein sicheres Verdrehen zu ermöglichen. Der Randbereich 8 des Rechenrings 7 trägt eine Belichtungszeitreihe 11 , die sich vom zweistelligen Sekundenbereich bis zum eintausendstel Sekundenbereich erstreckt und einer Blendenreihe 12 gegenüberliegt, die auf der Oberseite 6 des Gehäuses 2 radial innerhalb der Belichtungszeitreihe 11 fest angeordnet ist. Innerhalb der Blendenreihe 12 ist die Oberseite 6 des Gehäuses 2 mit einem Fenster 13 versehen, durch welches ein weiterer Radialbereich des Rechenringes 7 sichtbar ist, der eine Belichtungswertreihe 14 trägt. Die Belichtungswertreihe 14 im Fenster 13 muß zur Ermittlung der bezogen auf die gerade durchgeführte Messung korrekten Blenden/Belichtunszeitkombinationen - dargestellt durch die Belichtungszeitreihe 11 und die Blendenreihe 12 - in Übereinstimmung mit dem Belichtungswert 15 in EV gebracht werden, der auf dem digitalen Display 5 angezeigt wird.

Das Fenster 13 in der Gehäuseoberseite 6 und das Display 5 liegen quasi übereinander in der Oberseite 6 des Gehäuses 2, so daß der einzustellende Wert am Rechenring 7 im Fenster 13 sehr übersichtlich dem angezeigten EV-Wert zugeordnet werden kann.

Zur vereinfachten Handhabung steht der mit der Riffelung 10 versehene Rand 9 des Rechenringes 7 mit mehr als die Hälfte seines Umfanges über die Oberseite 6 des Gehäuses 2 radial hinaus.

Die am Gehäuse 2 angeordnete Gegenskala, nämlich die Blendenreihe 12 ist fest am Gehäuse 2 angebracht. Unterhalb des Displays 5 ist in der Oberseite 6 des Gehäuses 2 eine Meßtaste 16 angebracht, durch die das nicht näher dargestellte analog/digitale Meßsystem des Gerätes aktiviert werden kann. Unterhalb der Meßtaste 16 ist noch eine Programmauswahltaste 17 in die Oberseite 6 angeordnet.

In Zeichnungsfigur 1 ist deutlich zu sehen, daß im Display 5 neben dem Belichtungswert 15 auch die eingestellte Filmempfindlichkeit 18 sichtbar ist.

An der Frontseite 3 des Gehäuses 2 ist ferner ein Temperatursensor 19 vorgesehen, dessen Ausgangswerte ebenfalls auf dem Display 5 darstellbar sind.

Die Programmauswahltaste 17 und die Meßtaste 16 erlauben darüber hinaus die Aktivierung weiterer Funktionen, nämlich die Darstellung einer Uhrzeit auf dem Display 5, die von einer Zeitbasis 32 abgeleitet werden kann, ferner die Darstellung von in einem Speicher 33 abgespeicherten Belichtungswerten auf dem Display 5, die Darstellung einer Stoppuhrfunktion auf dem Display 5 und der gleichen mehr.

Auf der Frontseite 3 des Gehäuses 2 gegenüberliegenden Seite 20 ist noch ein Befestigungselement 21 angeordnet.

Vor dem lichtempfindlichen Element 4 ist eine Diffusorkalotte 22 angeordnet, die mittels einer Führung 23 seitlich weggeschoben werden kann, um sogenannte Spotmessungen durchführen zu können.

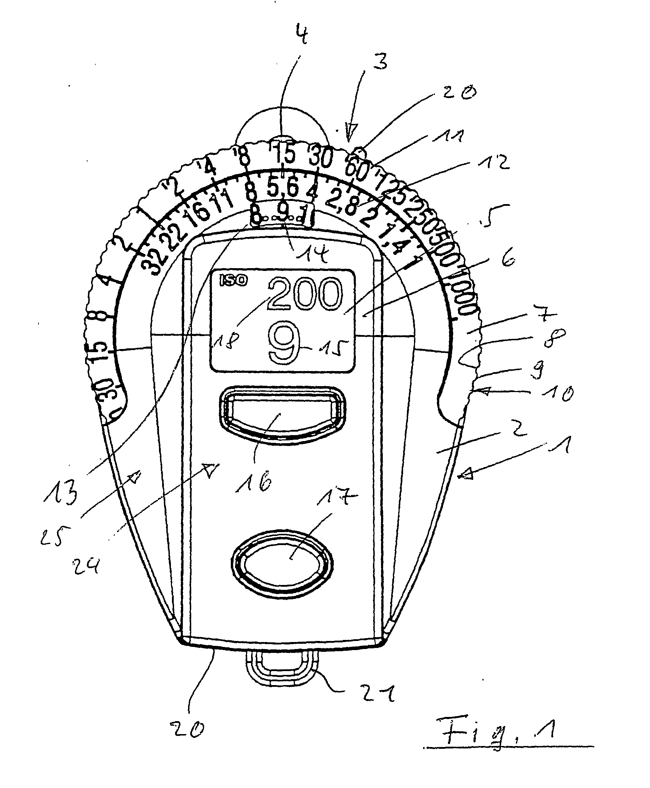

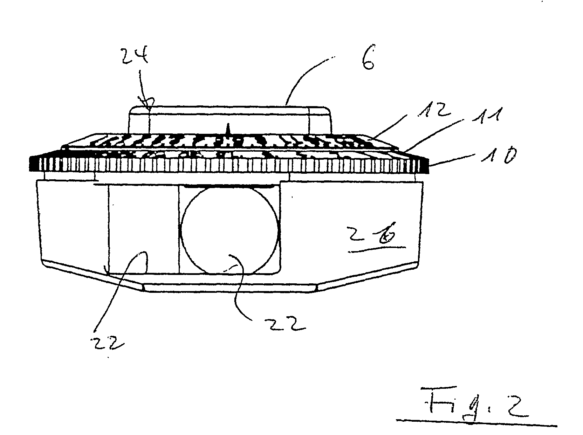

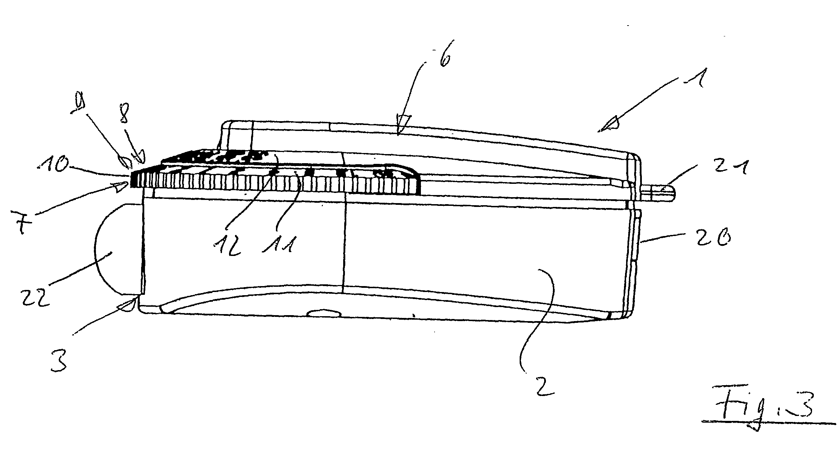

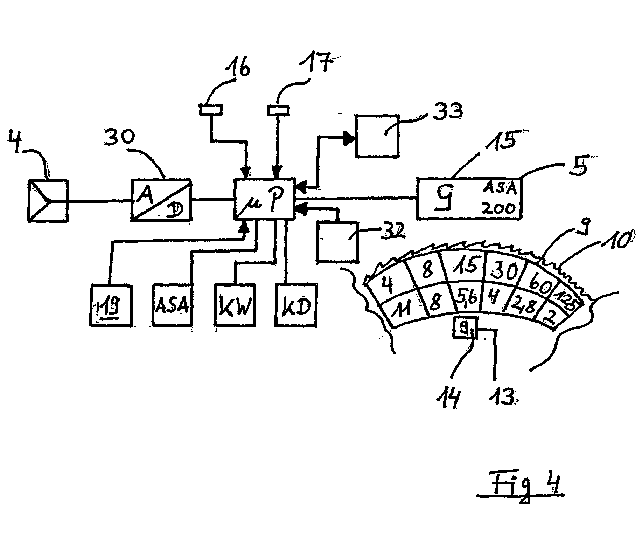

Insbesondere aus den Figuren 2 und 3 ergibt sich noch das ein Mittelbereich 24 der Oberseite 6 des Gehäuses 2 gegenüber dem umliegenden Randbereich 25 der Oberseite 6 etwas erhaben ausgebildet ist. Die Seitenflächen 26 verlaufen im Frontbereich des Gehäuses 2 mit geringem radialen Abstand nach innen versetzt unter der Riffelung 10 des Rechenringes 7, so daß dieser zwar gut verdrehbar ist, aber das integrale Gesamtbild des Gehäuses 2 nicht durch allzu große Überstände beeinflusst.

## Patentansprüche

1. Fotoelektrische Meßeinrichtung, insbesondere Handbelichtungsmesser (1) für fotografische Aufnahmen, mit
- einem Gehäuse (2),
- einem in dem Gehäuse (2) angeordneten lichtempfindlichen Element (4), dessen Ausgangssignal über einen Analog-/Digitalwandler (30) einem Mikroprozessor (31) zugeführt wird, wobei der Mikroprozessor (31) die vom Analog-/Digitalwandler (30) kommende Eingangsgröße mit weiteren Einstellwerten (Filmempfindlichkeit, Korrekturwert, Kalibrierdaten) zu einem Belichtungswert (z.B. EV) verrechnet, der auf einem Display (5) anzeigbar ist, sowie
- einem manuell verdrehbaren Rechenring (7), auf welchem entweder eine Belichtungszeitreihe (11) oder eine Blendenreihe (12) angeordnet ist, die durch Verdrehen des Rechenringes (7) mit einer am Gehäuse (2) angeordneten Blendenreihe (12) bzw. Belichtungszeitreihe (11) (Gegenskala) in Gegenüberstellung bringbar ist und wobei am Rechenring (7) zusätzlich eine gegenüber einer Gehäusemarkierung verdrehbare Belichtungswertereihe (14) angeordnet ist.

2. Meßeinrichtung nach Anspruch 1,
**dadurch gekennzeichnet, daß**
eine Oberseite (6) des Gehäuses (2) den Rechenring (7) bis auf einen Randbereich (8) mittig überdeckt.

3. Meßeinrichtung nach Anspruch 1 oder 2,
**dadurch gekennzeichnet, daß**
einzelne Belichtungswerte der auf dem drehbaren Rechenring (7) angebrachten Belichtungswertereihe (14) innerhalb eines als Gehäusemarkierung dienenden Gehäusefensters (13) durch Verdrehen darstellbar sind.

4. Meßeinrichtung nach Anspruch 3,
**dadurch gekennzeichnet, daß**
das Gehäusefenster (13) und das Display (5) nebeneinander- oder übereinanderliegend in einer Gehäusefläche angeordnet sind.

5. Meßeinrichtung nach Anspruch 3 oder 4,
**dadurch gekennzeichnet, daß**
das Gehäusefenster (13) und das Display (5) auf der Oberseite (6) des Gehäuses (2) angeordnet sind.

6. Meßeinrichtung nach einem der vorhergehenden Ansprüche,
**dadurch gekennzeichnet, daß**
der Rechenring (7) mit mehr als der Hälfte seines Umfanges radial über die Oberseite (6) des Gehäuses (2) hinaussteht.

7. Meßeinrichtung nach einem der vorhergehenden Ansprüche,
**dadurch gekennzeichnet, daß**
die am Gehäuse (2) angeordnete Gegenskala (11) fest am Gehäuse (2) angebracht ist.

8. Meßeinrichtung nach einem der vorhergehenden Ansprüche,
**dadurch gekennzeichnet, daß**
die gehäusefeste Gegenskala (11) und die am Rechenring (7) angeordnete verdrehbare Skala (12) konzentrisch ineinanderliegend angeordnet sind.

9. Meßeinrichtung nach einem der vorhergehenden Ansprüche,
**dadurch gekennzeichnet, daß**
am Gehäuse (2) eine Meßtaste (16) zur Aktivierung des analog-/digitalen Meßsystems angeordnet ist.

10. Meßeinrichtung nach einem der vorhergehenden Ansprüche,
**dadurch gekennzeichnet, daß**
am Gehäuse (2) eine Programmauswahltaste (17) angeordnet ist.

11. Meßeinrichtung nach einem der vorhergehenden Ansprüche,
**dadurch gekennzeichnet, daß**
auf dem Display (5) neben dem Belichtungswert (14) die Filmempfindlichkeit (18) anzeigbar ist.

12. Meßeinrichtung nach einem der vorhergehenden Ansprüche,
**dadurch gekennzeichnet, daß**
sie eine elektronische Zeitbasis (32) umfaßt und daraus abgeleitete Uhrzeitdaten auf dem Display (5) anzeigbar sind.

13. Meßeinrichtung nach Anspruch 12.
**dadurch gekennzeichnet, daß**
in einer Grundeinstellung Uhrzeitdaten anzeigbar sind und nach Drücken der Programmauswahltaste (17) im Display (5) Belichtungsdaten der zuletzt angewendeten Funktion anzeigbar sind.

14. Meßeinrichtung nach einem der vorhergehenden Ansprüche,
**dadurch gekennzeichnet, daß**
sie eine Speichereinrichtung (33) umfaßt, in welcher der zuletzt ermittelte, angezeigte Belichtungswert bis zur Durchführung der nachfolgenden Messung gespeichert ist.

15. Meßeinrichtung nach einem der vorhergehenden Ansprüche,
**dadurch gekennzeichnet, daß**
nach erstmaligem Aktivieren einer Spannngsquelle im Rahmen eines Selbsttests alle Anzeigesegmente des Displays (5) ansteuerbar sind.

16. Meßeinrichtung nach einem der vorhergehenden Ansprüche,
**dadurch gekennzeichnet, daß**
sie einen Temperatursensor (19) umfaßt und auf dem Display (5) von diesem abgeleitete Temperaturwerte anzeigbar sind.

17. Meßeinrichtung nach Anspruch 12 oder 13,
**dadurch gekennzeichnet, daß**
auf dem Display (5) eine aus der Zeitbasis (32) abgeleitete Stoppuhrfunktion anzeigbar ist.

## Claims

1. Photoelectric measuring means, more especially a manual exposure meter (1) for photographic pictures, said means having
- a housing (2),
- a light-sensitive element (4), which is disposed in the housing (2), the output signal of which element is supplied to a microprocessor (31) via an analog-to-digital converter (30), the microprocessor (31) computing the input variable, coming from the analog-to-digital converter (30), with additional control values (film sensitivity, correction value, calibration data) to form an exposure value (e.g. EV), which is displayable on a display (5), and
- a manually rotatable calculating ring (7), on which either a series of exposure times (11) or a series of apertures (12) is disposed, which, by rotating the calculating ring (7), can be brought to compare with a series of apertures (12) or a series of exposure times (11) (counter-scale) respectively disposed on the housing (2), and a series of exposure values (14), which is rotatable relative to a housing marker, being additionally disposed on the calculating ring (7).

2. Measuring means according to claim 1, **characterised in that** an upper end (6) of the housing (2) centrally covers the calculating ring (7) apart from an edge region (8).

3. Measuring means according to claim 1 or 2, **characterised in that** individual exposure values of the series of exposure values (14), mounted on the rotatable calculating ring (7), are displayable within a housing window (13), serving as the housing marker, through rotation.

4. Measuring means according to claim 3, **characterised in that** the housing window (13) and the display (5) are disposed so as to lie adjacent or above each other in one housing face.

5. Measuring means according to claim 3 or 4, **characterised in that** the housing window (13) and the display (5) are disposed on the upper end (6) of the housing (2).

6. Measuring means according to one of the preceding claims, **characterised in that** the calculating ring (7) protrudes with more than half of its circumference radially beyond the upper end (6) of the housing (2).

7. Measuring means according to one of the preceding claims, **characterised in that** the counter-scale (11), which is disposed on the housing (2), is securedly mounted on the housing (2).

8. Measuring means according to one of the preceding claims, **characterised in that** the counter-scale (11), which is securedly mounted on the housing, and the scale (12), which is rotatably disposed on the calculating ring (7), are disposed concentrically so as to lie one inside the other.

9. Measuring means according to one of the preceding claims, **characterised in that** a measuring button (16) for activating the analog/digital measuring system is disposed on the housing (2).

10. Measuring means according to one of the preceding claims, **characterised in that** a program selector button (17) is disposed on the housing (2).

11. Measuring means according to one of the preceding claims, **characterised in that** the film sensitivity (18) is displayable on the display (5) adjacent the exposure value (14).

12. Measuring means according to one of the preceding claims, **characterised in that** it includes an electronic time base (32), and clock time data derived therefrom are displayable on the display (5).

13. Measuring means according to claim 12, **characterised in that** clock time data are displayable in a basic setting and, after pressing the program selector button (17), exposure data of the last-used function are displayable in the display (5).

14. Measuring means according to one of the preceding claims, **characterised in that** it includes a storage means (33), in which the last-determined, displayed exposure value is stored until the subsequent measurement is effected.

15. Measuring means according to one of the preceding claims, **characterised in that**, after the initial activation of a voltage source within the scope of an automatic test, all of the display segments of the display (5) are actuatable.

16. Measuring means according to one of the preceding claims, **characterised in that** it includes a temperature sensor (19), and temperature values derived from said sensor are displayable on the display (5).

17. Measuring means according to claim 12 or 13, **characterised in that** a stopwatch function, derived from the time base (32), is displayable on the display (5).

## Revendications

1. Unité de mesure photoélectrique, en particulier posemètre manuel (1) pour des prises de vues photographiques, dotée
- d'un boîtier (2),
- d'un élément sensible à la lumière (4) agencé dans le boîtier (2), dont le signal de sortie est amené par un convertisseur analogique-numérique (30) à un microprocesseur (31), le microprocesseur (31) compensant la grandeur d'entrée provenant du convertisseur analogique-numérique (30) par d'autres valeurs de réglage (sensibilité du film, valeur de correction, données de calibrage) pour obtenir une valeur d'exposition (par exemple, EV), qui peut être affichée sur un écran d'affichage (5), ainsi que
- d'un disque calculateur (7) pouvant être tourné manuellement, sur lequel soit une série de temps d'exposition (11), soit une série de diaphragmes (12) est agencée, qui peut être amenée, par la rotation du disque calculateur (7) en face d'une série de diaphragmes (12) ou une série de temps d'exposition (11) (graduation inversée) agencée sur le boîtier (2) et une série de valeurs d'exposition (14), pouvant tourner par rapport à un repère sur le boîtier, étant agencée en supplément sur le disque calculateur (7).

2. Unité de mesure selon la revendication 1, **caractérisée en ce qu'**une partie supérieure (6) du boîtier (2) recouvre de manière centrée le disque calculateur (7) jusqu'à une zone de bord (8).

3. Unité de mesure selon la revendication 1 ou 2, **caractérisée en ce que** des valeurs d'exposition individuelles de la série de valeurs d'exposition (14) apposées sur le disque calculateur rotatif (7) peuvent être représentées par rotation à l'intérieur d'une fenêtre de boîtier (13) servant de repère de boîtier.

4. Unité de mesure selon la revendication 3, **caractérisée en ce que** la fenêtre de boîtier (13) et l'écran de visualisation (5) sont agencés l'un à côté de l'autre ou l'un au-dessus de l'autre dans une face du boîtier.

5. Unité de mesure selon la revendication 3 ou 4, **caractérisée en ce que** la fenêtre de boîtier (13) et l'écran d'affichage (5) sont agencés sur la partie supérieure (6) du boîtier (2).

6. Unité de mesure selon l'une des revendications précédentes, **caractérisée en ce que** le disque calculateur (7) fait saillie de manière radiale sur plus de la moitié de son périmètre au-dessus de la partie supérieure (6) du boîtier (2).

7. Unité de mesure selon l'une des revendications précédentes, **caractérisée en ce que** la graduation inversée (11) agencée sur le boîtier (2) est fixée solidement sur le boîtier (2).

8. Unité de mesure selon l'une des revendications précédentes, **caractérisée en ce que** la graduation inversée (11) solidaire du boîtier et la graduation rotative (12) agencée sur le disque calculateur (7) sont agencées de manière concentrique l'une dans l'autre.

9. Unité de mesure selon l'une des revendications précédentes, **caractérisée en ce qu'**une touche de mesure (16) est agencée sur le boîtier (2) afin d'activer le système de mesure analogique-numérique.

10. Unité de mesure selon l'une des revendications précédentes, **caractérisée en ce qu'**une touche de sélection de programme (17) est agencée sur le boîtier (2).

11. Unité de mesure selon l'une des revendications précédentes, **caractérisée en ce que** la sensibilité du film (18) peut être affichée sur l'écran de visualisation (5) à côté de la valeur d'exposition (14).

12. Unité de mesure selon l'une des revendications précédentes, **caractérisée en ce qu'**elle comprend une base de temps électronique (32) et **en ce que** des données horaires en découlant peuvent être affichées sur l'écran de visualisation (5).

13. Unité de mesure selon la revendication 12, **caractérisée en ce qu'**un réglage de base permet d'afficher des données horaires et après avoir appuyé sur la touche de sélection de programme (17) sur l'écran d'affichage (5) des données d'exposition de la dernière fonction utilisée peuvent être affichées.

14. Unité de mesure selon l'une des revendications précédentes, **caractérisée en ce qu'**elle comprend un dispositif de mémoire (33), dans lequel la dernière valeur d'exposition déterminée et affichée est enregistrée jusqu'à l'exécution de la mesure suivante.

15. Unité de mesure selon l'une des revendications précédentes, **caractérisée en ce qu'**après la première activation d'une source de tension dans le cadre d'un autocontrôle, tous les éléments d'affichage de l'écran d'affichage (5) peuvent être activés.

16. Unité de mesure selon l'une des revendications précédentes, **caractérisée en ce qu'**elle comprend un capteur de température (19) et en que des valeurs de température découlant de celui-ci peuvent être affichées sur l'écran d'affichage (5).

17. Unité de mesure selon la revendication 12 ou 13, **caractérisée en ce qu'**une fonction de chronomètre découlant de la base de temps (32) peut être affichée sur l'écran d'affichage (5).
